# EUROPÄISCHE PATENTANMELDUNG

(11) **EP 3 543 671 A1**
(43) Veröffentlichungstag der Anmeldung: **25.09.2019**
(21) Anmeldenummer: 19159883.8
(22) Anmeldetag: 28.02.2019
(51) Int. Cl.: G01L 9/00, G01L 15/00, G01L 23/10, G01L 23/18, G01L 1/16, G01L 1/18, G01L 1/22

(54) **DRUCKSENSOR**

(30) Priorität: 21.03.2018 AT 502352018
(71) Anmelder: Piezocryst Advanced Sensorics GmbH, 8020 Graz (AT)
(72) Erfinder: SCHRICKER, Alexander, 8046 GRAZ (AT); FALK, Patrick, 8010 GRAZ (AT); KROEGER, Dietmar, 8010 GRAZ (AT)
(74) Vertreter: Babeluk, Michael

(57) **Zusammenfassung**

Die Erfindung betrifft einen Drucksensor (1) für statische und dynamische Druckmessungen, mit einem Sensorgehäuse (2) und einer druckseitig angeordneten Sensormembran (3), wobei im Sensorgehäuse (2) ein von der Sensormembran (3) beaufschlagtes piezoelektrisches Messelement (4) für die dynamische Druckmessung und ein weiteres Messelement (5) für die statische Druckmessung angeordnet sind. Erfindungsgemäß weist die Sensormembran (3) einen ersten Membranbereich (11) auf, der für die dynamische Druckmessung dient, sowie einen davon abgegrenzten, zweiten Membranbereich (12), der für die statische Druckmessung dient.

## Beschreibung

Die Erfindung betrifft einen Drucksensor für statische und dynamische Druckmessungen, mit einem Sensorgehäuse und einer druckseitig angeordneten Sensormembran, wobei im Sensorgehäuse ein von der Sensormembran beaufschlagtes piezoelektrisches Messelement für die dynamische Druckmessung und ein weiteres Messelement für die statische Druckmessung angeordnet sind.

Die Sensormembran eines Drucksensors ist so ausgestaltet, dass der an der Membran anliegende Druck optimal auf das jeweilige Messsystem übertragen wird. Nicht immer können mit nur einem Messsystem alle Anforderungen erfüllt werden, die an die Druckmessung gestellt werden. Gerade bei dynamischen Prozessen mit erhöhtem Grunddruck ist es wünschenswert, den herrschenden Druck mit unterschiedlichen Systemen auszuwerten. Ein Beispiel ist die Messung in einer Brennkammer einer Brennkraftmaschine. Hier herrscht der vom Betriebszustand der Brennkraftmaschine abhängigen Grunddruck von mehreren Bar und darüber überlagert sind Brennkammerschwingungen im Millibar-Bereich. Für die Messung der Brennkammerschwingungen sind piezoelektrische Sensoren sehr gut geeignet, da sie, weil unabhängig vom Grunddruck, kleine Druckschwankungen sehr gut auflösen können. Der statische Druckanteil kann mit piezoelektrischen Sensoren jedoch nicht gemessen werden. Hierfür sind beispielsweise Sensoren die nach dem DMS (Dehnmessstreifen) Prinzip arbeiten sehr gut geeignet.

Die Montage von zwei Drucksensoren, die für die jeweilige Messaufgabe gut geeignet sind, birgt jedoch Nachteile. Beide Messprinzipien messen bis in niedrige Frequenzbereiche, die sich überlappen. Sind nun die beiden Drucksensoren räumlich voneinander getrennt, so kann aufgrund der örtlichen Trennung nicht phasenrichtig gemessen werden. Weiters sind Zugänge zu einer Brennkammer in Brennkraftmaschinen meist sehr aufwändig herzustellen. Zwei getrennte Zugänge stellen somit auch einen Kostennachteil dar.

Will man jedoch statische und dynamische Messprinzipien in einem Drucksensor vereinen, ergeben sich - beispielsweise bei der Kombination eines DMS-Sensors und eines Piezosensors - unterschiedliche Anforderungen am die Sensormembran. Hierfür müssen die beiden Messprinzipien für DMS-Sensoren und Piezosensoren kurz beschrieben werden.

Ein piezoelektrischer Drucksensor ist im Wesentlichen ein Kraftsensor mit einer vorgespannten Sensormembran die Druck in Kraft wandelt. Die Membran stützt sich im Randbereich an einem Gehäuse und im zentralen Bereich auf das piezoelektrische Messelement ab. Das signalerzeugende Piezoelement ist vergleichsweise steif, sodass bei Druckbeaufschlagung im Vergleich zu anderen Messprinzipien kaum ein Messweg der Sensormembran festgestellt werden kann.

Verschieden dazu sind Sensoren, die auf dem Dehnmessprinzip beruhen. Mit solchen Sensoren lassen sich statische Drücke und niederfrequente Druckschwankungen gut erfassen. Bei diesem Prinzip wird eine Verformung gemessen und die Sensormembrane so ausgelegt, dass sich bei Druckbeaufschlagung ein relativ großer Messweg ergibt. Bei einer auf die Membran aufgebrachten Leiterstruktur (Mäander) verändert sich in Abhängigkeit der Deformation den elektrischen Widerstand. Die beiden Messprinzipien sind also im Hinblick auf die verwendeten Membranen grundverschieden.

Ein in der EP 0 065 511 A1 beschriebener, piezoelektrischer Messwertaufnehmer weist neben zumindest einem piezoelektrischen Sensorelement zumindest ein weiteres Messelement für statische bzw. quasistatische Messungen auf, welches, in gleicher Weise wie das piezoelektrische Element, von der zu messenden Größe beaufschlagt ist und eine eigene Signalleitung besitzt. Das weitere Messelement kann ebenfalls von einem piezoelektrischen Element gebildet sein, welches unter Ausnutzung des inversen Piezoeffektes zu mechanischen Schwingungen angeregt wird, wobei die Änderung des Schwingverhaltens des aus dem angeregten Piezoelement und seiner Umgebung gebildeten Schwingsystems als Messwert für eine statische bzw. quasistatische Messung dient.

Gemäß einer Ausführungsvariante der EP 0 065 511 A1 weist der Messwertaufnehmer ein zweigeteiltes Gehäuse auf, dessen unterer Teil mit einem Außengewinde zum Einschrauben des Messwertaufnehmers in eine Bohrung in der Begrenzung eines Messraumes versehen ist. An der unteren Seite des Gehäuses ist eine Vorspannhülse und auf dieser eine Membran mit einem vorgesetzten Hitzeschild abdichtend angeschweißt. Die Vorspannhülse enthält ein aus einem Satz von Quarzscheiben bestehendes piezoelektrisches Sensorelement, welches über einen Druckstempel mit dem Zentralbereich der Membran in Verbindung steht. Der eine Pol des mittels einer Isolierhülse gegen die Vorspannhülse elektrisch isolierten piezoelektrischen Sensorelementes ist über die Gehäusemasse geführt; der andere Pol ist mittels einer isoliert geführten Signalleitung mit einem Steckkontakt verbunden. In einem Bereich mit verkleinerter Wandstärke ist ein Dehnmessstreifen an der Außenseite der Vorspannhülse angebracht, dessen einer Pol ebenfalls über die Gehäusemasse und dessen anderer Pol über eine elektrisch isolierte Signalleitung mit einem weiteren Steckkontakt kontaktiert ist. Bei dieser Ausführungsvariante dient das piezoelektrische Sensorelement zur dynamischen Messung der zu messenden Zustandsgröße und der Dehnmessstreifen zur statischen bzw. quasistatischen Messung.

Aus der US 7,181,972 B2 ist ein statisch und dynamisch arbeitender Drucksensor bekannt. Der Sensor weist eine Membran auf, die aus Galliumnitrid gebildet ist. Die Membran ist auf einem Substrat angeordnet, das nass geätzt wurde, um einen geschlossenen, durch Druck veränderlichen Hohlraum zu bilden. Die Membran stellt bei Druckbeaufschlagung durch Verformung sowohl ein kapazitives Signal als auch piezoelektrisches Signal zur Verfügung. Der Sensor dient zur Messung von Druck, Kraft und mechanischen Vibrationen.

Schließlich ist aus der EP 2 715 300 B1 ein Sensor für die Messung von Druck und/oder Kraft bekannt, der zwei Messprinzipien (dynamische und statische Messung) in einem Sensorgehäuse kombiniert. Der Sensor weist zwei piezoelektrische Messelemente auf, die im transversalen Modus betrieben werden, um dynamisch Druck zu messen. Die piezoelektrischen Messelemente sind stehend im Sensorgehäuse gehalten und sind vorgespannt. Über die Sensormembran wird Kraft auf die Stirnflächen der Messelemente eingeleitet, wobei diese proportional zur anliegenden Kraft geringfügig gestaucht werden. Diese Stauchung wird genützt, um die vom dynamischen Druck abhängigen Messsignale zu erzeugen. Für eine statische Druckmessung ist eine Dehnmessstruktur vorgesehen, die auf einem oder mehreren, zusätzlichen piezoelektrischen Elementen aufgebracht ist. Beispielsweise kann auf der Elektrodenfläche eines oder mehrerer der piezoelektrischen Messelemente mittels Dünnschichttechnik ein Dielektrikum und anschließend eine Dehnmessstruktur aufgebracht sein. Da somit das Signal für die dynamische Messung als auch das Signal für die statische Messung über dieselbe Membran erzeugt werden, ist eine phasenrichtige Messung beider Signale möglich. Nachteiliger Weise kann jedoch die Sensormembran in ihrer Formgebung und ihren mechanischen Eigenschaften nicht für beide Messprinzipien optimiert sein, sodass immer Kompromisse eingegangen werden müssen.

Aufgabe der Erfindung ist es, die genannten Nachteile bekannter Drucksensoren zu vermeiden und einen Drucksensor für die gleichzeitige statische und dynamische Messung vorzuschlagen, der einfach herzustellen ist und optimal an die Erfordernisse unterschiedlicher Messprinzipien angepasst werden kann.

Erfindungsgemäß wird dies dadurch erreicht, dass die Sensormembran einen ersten Membranbereich aufweist, der für die dynamische Druckmessung dient, sowie einen davon abgegrenzten, zweiten Membranbereich, der für die statische Druckmessung dient.

Besonders vorteilhaft ist es, wenn der erste Membranbereich einen äußeren Auflagering zur Befestigung am Sensorgehäuse aufweist und sich mit einem inneren Stützring zur Krafteinleitung am piezoelektrischen Messelement abstützt, wobei der zweite Membranbereich innerhalb des inneren Stützringes angeordnet ist und beispielsweise eine Dehnmessstruktur oder eine piezorestriktive Struktur aufweist.

Die erfindungsgemäße Sensormembran kann beispielsweise einen zentralen biegeweichen Bereich für ein erstes Messprinzip (Dehnmessstruktur) und einen durch einen Stützring abgegrenzten, ringförmigen Bereich für ein zweites Messprinzip (piezoelektrisches Messelement) aufweisen, wobei beide Membranbereiche unabhängig voneinander für das jeweilige Messprinzip optimiert werden können.

Gemäß einer vorteilhaften Ausführungsvariante der Erfindung kann die Sensormembran mehrstückig hergestellt sein, wobei der zweite Membranbereich für die statische Druckmessung einen äußeren Haltering aufweist, der in einer ringförmigen Aufnahme des inneren Stützringes des ersten Membranbereichs kraft- oder materialschlüssig befestigt ist. Die Materialien für den ersten und den zweiten Membranbereich können dadurch frei gewählt und für die unterschiedlichen Messaufgaben optimiert werden.

Die Erfindung wird im Folgenden anhand von zum Teil schematischen Ausführungsbeispielen näher erläutert. Es zeigen:
- Fig. 1: eine erste Ausführungsvariante eines erfindungsgemäßen Drucksensors für statische und dynamische Druckmessungen in einer Schnittdarstellung;
- Fig. 2: den Drucksensor gemäß Fig. 1 in einer Schnittdarstellung nach Linie II-II in Fig. 1; sowie
- Fig. 3: eine zweite Ausführungsvariante eines erfindungsgemäßen Drucksensors in einer Schnittdarstellung gemäß Fig. 1.

Funktionsgleiche Teile sind in den beiden Ausführungsvarianten mit gleichen Bezugszeichen versehen.

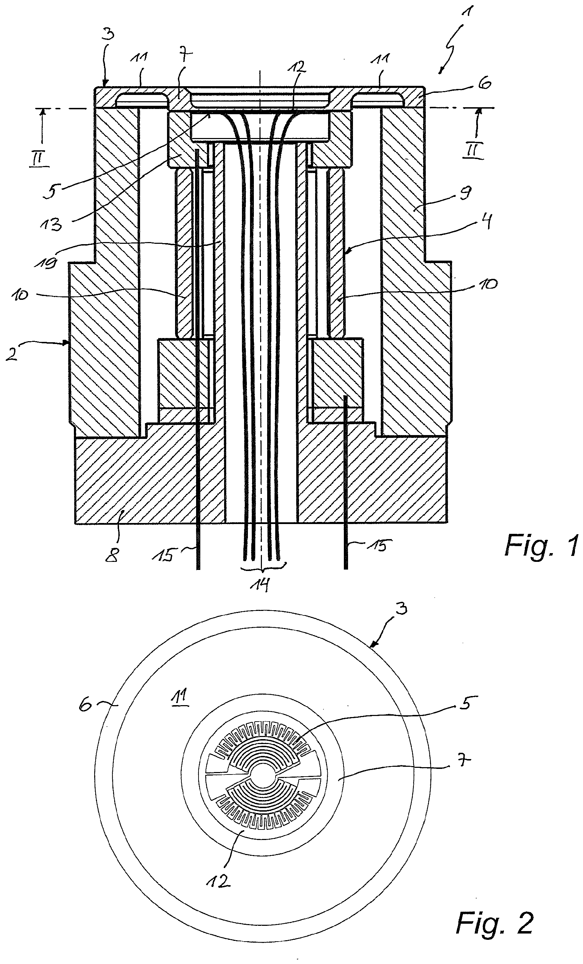

Die in den Fig. 1 und Fig. 2 dargestellte erste Ausführungsvariante der Erfindung zeigt einen Drucksensor 1 für die statische und die dynamische Druckmessung, mit einem Sensorgehäuse 2, im Wesentlichen aus einer Basis 8, einer zylindrischen Wand 9 und einer druckseitig angeordneten Sensormembran 3. Im Sensorgehäuse 2 sind ein von der Sensormembran 3 beaufschlagtes piezoelektrisches Messelement 4 für die dynamische Druckmessung und ein weiteres Messelement 5 (beispielsweise eine Dehnmessstruktur (DMS) oder eine piezoresistive Struktur) für die statische Druckmessung angeordnet. Zwischen der Sensormembran 3 und dem piezoelektrischen Messelement 4 ist ein Stützelement 13 angeordnet. Wie in Fig. 1 angedeutet, kann das piezoelektrische Messelement 4 mithilfe eines zentralen Vorspannelements 19, beispielsweise einer Rohrfeder, die mit dem Stützelement 13 verschweißt ist, vorgespannt sein.

Die Sensormembran 3 weist einen ersten Membranbereich 11 auf, der mit Hilfe des piezoelektrisches Messelements 4 für die dynamische Druckmessung dient, sowie einen davon abgegrenzten, zweiten Membranbereich 12, der mit Hilfe der Dehnmessstruktur 5 für die statische Druckmessung dient.

Die Sensormembran 3 ist somit in mehrere funktionelle Bereiche gegliedert. Der erste Membranbereich 11 weist einen äußeren Auflagering 6 zur Befestigung (beispielsweise durch Schweißen) an der Wand 9 des Sensorgehäuses 2 auf und stützt sich mit einem inneren Stützring 7 zur Krafteinleitung in das piezoelektrische Messelement 4 an diesem ab. Der zweite Membranbereich 12 ist kreisförmig innerhalb des inneren Stützringes 7 angeordnet und trägt die DMS-Struktur 5, beispielsweise in Form einer Messbrücke (siehe Fig. 2).

Das piezoelektrische Messelement 4 weist im Beispiel gemäß Fig. 1 stab- oder blättchenförmige Kristallelemente 10 unter Ausnutzung des transversalen Piezoeffekts auf, wobei die Signalableitung 14 der DMS-Struktur 5 z.B. durch die zentrale Öffnung der Rohrfeder 19 erfolgen kann. Die separate Signalableitung des piezoelektrischen Messelementes 4 ist mit 13 bezeichnet.

Die Sensormembran 3 kann bevorzugt einstückig hergestellt sein, wobei der erste Membranbereich 11 für die dynamische Druckmessung konzentrisch um den zweiten Membranbereich 12 für die statische Druckmessung angeordnet ist.

Insbesondere wenn der zweite, innere Membranbereich 12 eine DMS-Struktur 5 aufweist, kann dieser im Vergleich zum ersten Membranbereich 11 biegeweicher ausgeführt sein, um größere Messwege zu ermöglichen.

Erfindungsgemäß weist der äußere Auflagering 6 und der innere Stützring 7 eine Materialstärke auf, die größer ist als die doppelte Dicke D des ersten Membranbereichs 11. Die beiden Membranbereiche 11 und 12 sind in einer Ebene oder - wie dargestellt - bevorzugt in Parallelebenen angeordnet, um eine problemlose Bearbeitung des inneren Membranbereichs 12 zu ermöglichen.

Im Fall der einstückigen bzw. einteiligen Herstellung kann die Sensormembran 3 beispielsweise aus einem zeitstandfesten Werkstoff, beispielsweise einer Nickellegierung (z.B. NiCr20Co18Ti EN Werkstoffnummer 2.4632 oder UNS N07090) hergestellt sein.

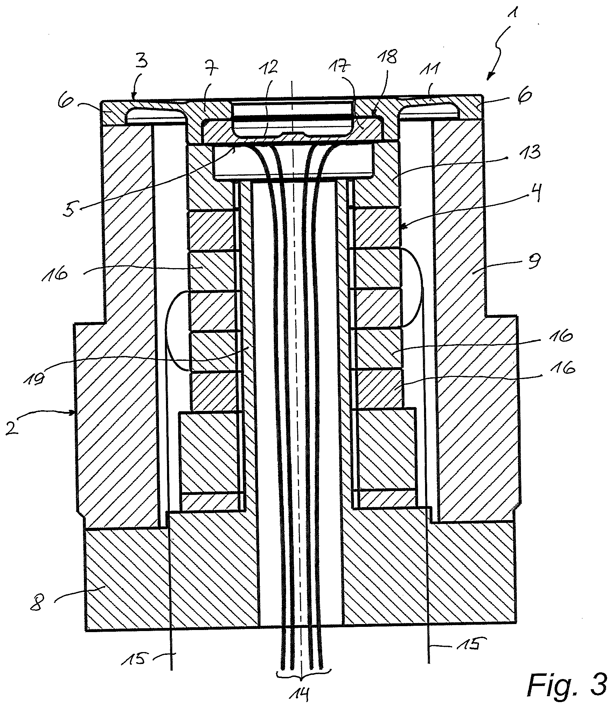

Die Ausführungsvariante gemäß Fig. 3 zeichnet sich durch eine mehrteilige Sensormembran 3 aus, wobei der zweite Membranbereich 12 für die statische Druckmessung einen äußeren Haltering 17 aufweist, der in einer ringförmigen Aufnahme 18 des inneren Stützringes 7 des ersten Membranbereichs 11 kraft- oder materialschlüssig befestigt ist.

Die zweiteilige Variante zeichnet sich dadurch aus, dass für den inneren Membranbereich 12 und den äußeren Membranbereich 11 unterschiedliche Materialien verwendet werden können. Beispielsweise kann der innere Membranbereich 12 aus einem elektrisch isolierenden Material (z.B. Saphir) bestehen, sodass die DMS-Struktur direkt auf die Membran aufgebracht werden kann.

Das piezoelektrische Messelement 4 weist im Beispiel gemäß Fig. 3 mehrere kreisringförmige Kristallelemente 16 auf, die unter Ausnutzung des longitudinalen Piezoeffekts eingesetzt werden, wobei die Signalableitung 14 der DMS-Struktur 5 z.B. durch die zentrale Öffnung der Rohrfeder 19 erfolgen kann. Die separate Signalableitung des piezoelektrischen Messelementes 4 ist mit 13 bezeichnet.

## Patentansprüche

1. Drucksensor (1) für statische und dynamische Druckmessungen, mit einem Sensorgehäuse (2) und einer druckseitig angeordneten Sensormembran (3), wobei im Sensorgehäuse (2) ein von der Sensormembran (3) beaufschlagtes piezoelektrisches Messelement (4) für die dynamische Druckmessung und ein weiteres Messelement (5) für die statische Druckmessung angeordnet sind, **dadurch gekennzeichnet, dass** die Sensormembran (3) einen ersten Membranbereich (11) aufweist, der für die dynamische Druckmessung dient, sowie einen davon abgegrenzten, zweiten Membranbereich (12), der für die statische Druckmessung dient.

2. Drucksensor (1) nach Anspruch 1, **dadurch gekennzeichnet, dass** der erste Membranbereich (11) einen äußeren Auflagering (6) zur Befestigung am Sensorgehäuse (2) aufweist und sich mit einem inneren Stützring (7) zur Krafteinleitung am piezoelektrischen Messelement (4) abstützt, wobei der zweite Membranbereich (12) innerhalb des inneren Stützringes (7) angeordnet ist.

3. Drucksensor (1) nach Anspruch 1 oder 2, **dadurch gekennzeichnet, dass** das weitere Messelement (5) als Dehnmessstruktur oder als piezoresistive Struktur ausgebildet ist, die in den zweiten Membranbereich (12) integriert ist oder am zweiten Membranbereich (12) angeordnet ist.

4. Drucksensor (1) nach einem der Ansprüche 1 bis 3, **dadurch gekennzeichnet, dass** die Sensormembran (3) einstückig hergestellt ist, wobei der erste Membranbereich (11) für die dynamische Druckmessung konzentrisch um den zweiten Membranbereich (12) für die statische Druckmessung angeordnet ist.

5. Drucksensor (1) nach einem der Ansprüche 1 bis 3, **dadurch gekennzeichnet, dass** die Sensormembran (3) mehrstückig hergestellt ist, wobei der zweite Membranbereich (12) für die statische Druckmessung einen äußeren Haltering (17) aufweist, der in einer ringförmigen Aufnahme (18) des inneren Stützringes (7) des ersten Membranbereichs (11) kraft- oder materialschlüssig befestigt ist.

6. Drucksensor (1) nach Anspruch 5, **dadurch gekennzeichnet, dass** die Materialien des ersten (11) und des zweiten Membranbereichs (12) unterschiedlich sind.

7. Drucksensor (1) nach einem der Ansprüche 2 bis 6, **dadurch gekennzeichnet, dass** der äußere Auflagering (6) und der innere Stützring (7) jeweils eine Materialstärke aufweisen, die größer ist als die doppelte Dicke (D) des ersten Membranbereichs (11).

8. Drucksensor (1) nach einem der Ansprüche 1 bis 7, **dadurch gekennzeichnet, dass** das piezoelektrische Messelement (4) stab- oder blättchenförmige Kristallelemente (10) unter Ausnutzung des transversalen Piezoeffekts aufweist.

9. Drucksensor (1) nach einem der Ansprüche 1 bis 7, **dadurch gekennzeichnet, dass** das piezoelektrische Messelement (4) scheibenförmige oder kreisringförmige Kristallelemente (16) unter Ausnutzung des longitudinalen Piezoeffekts aufweist.

10. Drucksensor (1) nach Anspruch 8 oder 9, **dadurch gekennzeichnet, dass** die Kristallelemente (10, 16) des piezoelektrischen Messelements (4) ein zentrales Vorspannelement (1) aufweisen, das die Signalableitung (14) für die dynamische Druckmessung aufnimmt.
